# FASCICULE DE BREVET EUROPEEN

(11) **EP 4 259 376 B1**
(45) Date de publication et mention de la délivrance du brevet: **31.07.2024**
(21) Numéro de dépôt: 21847990.5
(22) Date de dépôt: 08.12.2021
(51) Int. Cl.: B23P 15/04, B23P 6/00, F01D 5/20, F01D 5/14, B23K 26/00, B23K 26/342, B33Y 10/00, B33Y 80/00, B22F 5/04, B22F 7/06, B22F 10/25, B23K 101/00

(54) **MÉTHODE DE FABRICATION D'AUBE DE TURBINE HAUTE PRESSION COMPORTANT UNE CAVITÉ SOUS BAIGNOIRE**
VERFAHREN ZUR HERSTELLUNG EINES HOCHDRUCKTURBINENSCHAUFELS MIT EINEM HOHLRAUM UNTER EINER QUETSCHSPITZE
METHOD OF PRODUCING A HIGH-PRESSURE TURBINE BLADE COMPRISING A CAVITY UNDER A SQUEALER TIP

(30) Priorité: 10.12.2020 FR 2012855
(43) Date de publication de la demande: 18.10.2023
(73) Titulaire: SAFRAN, 75015 Paris (FR)
(72) Inventeur: OSTINO, Léandre, 77550 Moissy-Cramayel (FR); CARIOU, Romain, Pierre, 77550 Moissy-Cramayel (FR); PAGNONI, Filippo, 77550 Moissy-Cramayel (FR); PAQUIN, Sylvain, 77550 Moissy-Cramayel (FR); ROLLINGER, Adrien, Bernard, Vincent, 77550 Moissy-Cramayel (FR)
(74) Mandataire: Brevalex
(86) Numéro de dépôt international: PCT/FR2021/052242
(87) Numéro de publication internationale: WO 2022/123177

(56) Documents cités:
- FR-A1- 3 037 829
- FR-A1- 3 037 972
- US-A1- 2018 236 556
- US-A1- 2020 256 196

## Description

### DOMAINE TECHNIQUE

L'invention concerne la fabrication d'une aube de turbomachine telle qu'une aube de turboréacteur, de turbopropulseur, de turbine à gaz d'hélicoptère, d'APU (Unité Auxiliaire de Puissance), ou encore une aube de turbine à gaz industrielle.

### ÉTAT DE LA TECHNIQUE ANTÉRIEURE

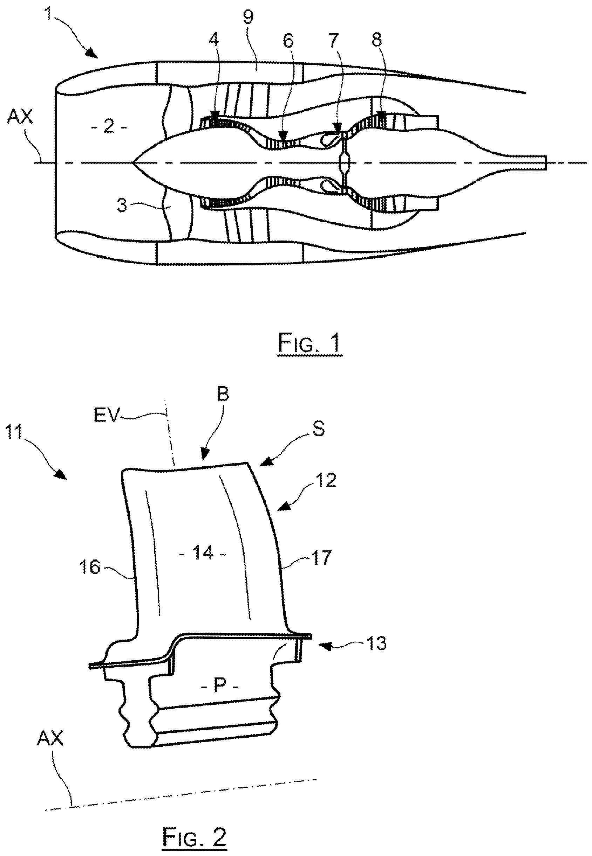

Dans un turboréacteur, repéré par 1 dans la figure 1, l'air est admis dans une manche d'entrée 2 pour traverser une soufflante comportant une série de pales rotatives 3 avant de se scinder en un flux primaire central et un flux secondaire entourant le flux primaire.

Le flux primaire est compressé par des étages de compesseurs 4 et 6 avant d'atteindre une chambre de combustion 7, après quoi il se détend en traversant des turbines 8, avant d'être évacué en générant une poussée. Le flux secondaire est quant à lui propulsé directement par la soufflante pour générer la poussée principale.

Chaque turbine 8 comporte des séries d'aubes orientées radialement et régulièrement espacées autour d'un arbre de rotation AX monté en rotation dans un carter externe 9 entourant l'ensemble.

Le refroidissement des aubes est assuré en faisant circuler dans chaque aube de l'air prélevé par exemple au nieau du compresseur ou dans le flux secondaire et admis en pied d'aube, cet air étant évacué par des trous traversant les parois de ces aubes.

Une telle aube comporte un sommet ayant une forme de baignoire, et pouvant comporter une cavité sous baignoire dans laquelle circule de l'air pour améliorer le refroidissement du sommet.

Il s'ensuit qu'une telle aube présente des formes internes et externes complexes rendant sa fabrication par fonderie délicate : chaque portion creuse doit être délimitée par un noyau devant être rigidement maintenu dans un moule durant l'opération de coulée. En pratique, la complexité de forme d'une aube comportant une cavité sous baignoire rend sa fabrication par fonderie particulièrement délicate, et par là-même coûteuse.

Les documents FR3037829, FR3037972, FR3037972A1, et US2020/256196 divulguent des aubes de formes analogues, mais nécessitant des procédés de fabrication complexes qui induisent des coûts de fabrication élevés.

Dans ce cadre, l'objet de l'invention est d'apporter une solution pour simplifier la fabrication d'une aube comportant une cavité sous baignoire améliorant le refroidissement du sommet d'aube.

### EXPOSÉ DE L'INVENTION

A cet effet, conformément à la revendication 1, a pour objet un procédé de fabrication d'une aube de turbomachine comprenant une paroi d'intrados et une paroi d'extrados espacées l'une de l'autre, cette aube comprenant un sommet avec :
- une paroi de fond s'étendant de la paroi d'intrados à la paroi d'extrados la paroi d'intrados et la paroi d'extrados comprenant chacune un bord libre s'étendant au-delà de cette paroi de fond pour délimiter conjointement avec cette paroi de fond une forme de baignoire au sommet de l'aube ;
- une paroi séparatrice s'étendant de la paroi d'intrados à la paroi d'extrados en étant espacée de la paroi de fond pour délimiter avec cette paroi de fond une cavité sous baignoire ;
le procédé comportant :
- une étape de moulage pour constituer au moins la paroi d'intrados, la paroi d'extrados et la paroi séparatrice ;
- une étape de constitution de la paroi de fond avec un procédé de fabrication additive par apport de matière métallique.

Cette solution permet de constituer une cavité sous baignoire sans devoir utiliser un agencement de noyaux complexe pour constituer la pièce brute, ce qui permet de simplifier significativement l'opération de moulage et de diminuer le taux de rebut en production.

Un mode de réalisation de l'invention concerne également un procédé ainsi défini, dans lequel le procédé de fabrication additive est un procédé par dépôt de poudre métallique fusionnée par rayon laser.

Un mode de réalisation de l'invention concerne également un procédé ainsi défini, comportant la formation de trous de dépoussiérage dans la paroi de fond.

Un mode de réalisation de l'invention concerne également un procédé ainsi défini, dans lequel les trous de dépoussiérage de la paroi de fond ont des orientations obliques dirigées vers les bords des parois d'intrados et/ou d'extrados.

Un mode de réalisation de l'invention concerne également un procédé ainsi défini, comportant la formation dans la paroi séparatrice de trous de dépoussiérage qui sont décalés par rapport aux trous de dépoussiérage de la paroi de fond.

Un mode de réalisation de l'invention concerne également un procédé ainsi défini, dans lequel chaque trou de dépoussiérage de la paroi séparatrice est à une distance de la périphérie de l'aube formée par les parois d'intrados et d'extrados qui est inférieure à la distance séparant le trou de dépoussiérage correspondant de la paroi de fond de la périphérie de l'aube.

Un mode de réalisation de l'invention concerne également un procédé ainsi défini, comportant la formation de trous de dépoussiérage traversant la paroi de fond, chaque trou de dépoussiérage de la paroi de fond étant situé en vis-à-vis d'un trou de dépoussiérage de la paroi séparatrice.

Un mode de réalisation de l'invention concerne également un procédé ainsi défini, dans lequel on forme autant de trous de dépoussiérage traversant la paroi de fond que de trous de dépoussiérage traversant la paroi séparatrice.

Un mode de réalisation de l'invention concerne également un procédé ainsi défini, comportant la formation dans l'aube d'un conduit d'alimentation en air de la cavité sous baignoire.

### BRÈVE DESCRIPTION DES DESSINS

La figure 1 est une vue en coupe longitudinale d'un turboréacteur connu ;
La figure 2 est une vue d'ensemble en perspective d'une aube selon l'invention ;
La figure 3 est une vue en coupe selon un plan normal à l'axe de rotation d'une aube selon un premier mode de réalisation de l'invention ;
La figure 4 est vue en perspective du sommet d'une aube selon le premier mode de réalisation de l'invention ;

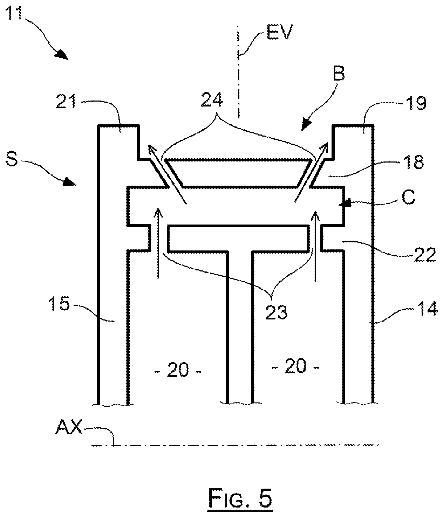

La figure 5 est une vue en coupe selon un plan normal à l'axe de rotation d'une aube selon un deuxième mode de réalisation de l'invention ;
La figure 6 est une vue en coupe selon un plan normal à l'axe de rotation d'une aube selon un troisième mode de réalisation de l'invention.

### EXPOSÉ DÉTAILLÉ DE MODES DE RÉALISATION PARTICULIERS

Sur la figure 2, une aube selon l'invention repérée par 11 comprend un pied P par lequel elle est fixée à un élément de rotor non représenté, et une pale 12 portée par ce pied P, le pied et la pale étant séparés par une plateforme 13.

La pale 12 a une forme vrillée autour d'un axe EV dit axe d'envergure qui est perpendiculaire à l'axe AX. Elle comprend une base par laquelle elle est raccordée à la plateforme 13 et qui se prolonge radialement jusqu'à un sommet S constituant l'extrémité libre de cette pale 12.

Les deux parois principales de la pale 12, qui sont sa paroi d'intrados 14 et sa paroi d'extrados 15 sont espacées l'une de l'autre en partie centrale de l'aube 11, et elles sont réunies au niveau du bord d'attaque 16 de l'aube 11 et du bord de fuite 17 de cette aube 11.

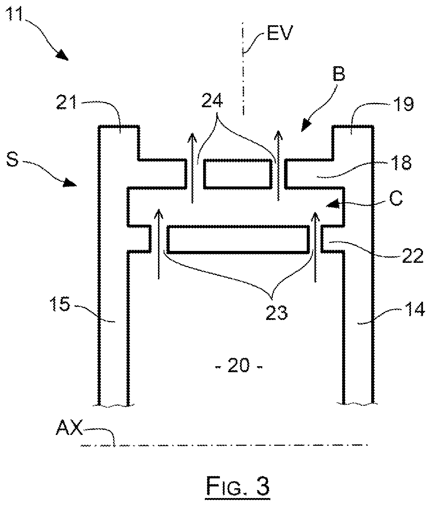

Le sommet S de l'aube 11 comporte une paroi de fond 18 sensiblement normale à la direction EV, qui s'étend de la paroi d'intrados à la paroi d'extrados. Cette paroi de fond (voir figure 3) est en retrait vers l'axe AX par rapport aux extrémités terminales des bords libres 19 et 21 des parois d'intrados 14 et d'extrados 15. Cette paroi de fond 18 délimite conjointement avec ces bords 19 et 21 une portion creuse ouverte en direction opposée à l'axe AX, appelée baignoire et repérée par B, qui est située au niveau du sommet S.

Comme visible sur la figure 3, l'aube comporte une cavité sous baignoire C, délimitée selon la direction EV par la paroi de fond 18 et par une paroi séparatrice 22 s'étendant de la paroi d'intrados 14 à la paroi d'extrados 15, en étant espacée de cette paroi 18 et sensiblement parallèle à celle-ci.

L'aube 11 comporte des conduits de refroidissement situés entre les parois d'intrados 14 et d'extrados 15, qui s'étendent entre le pied P et la paroi séparatrice 22 esentiellement selon la direction d'envergure EV. Ces conduits sont alimentés par de l'air frais collecté au niveau du pied P pour assurer le refroidissement des différentes régions de l'aube.

L'air circulant dans ces conduits, repérés par 20 sur les figures, est évacué par des trous de dépoussiérage 23 traversant la paroi séparatrice 22, puis par des trous de dépoussiérage 24 complémentaires traversant la paroi de fond 18. L'air issu des conduits de refroidissement est ainsi admis dans la cavité sous baignoire C par les trous 23, et il est évacué vers la baignoire B à travers les trous 24. Cet air de dépoussiérage assure ainsi le refroidissement de la cavité sous baignoire C et de la paroi de fond 18, c'est-à-dire du sommet d'aube, sans devoir augmenter le débit d'air alimentant l'aube pour son refroidissement.

Les trous de dépoussiérage tels que les trous 23 et 24 présentent une section plus importante que d'autres trous de refroidissement de l'aube, de manière à assurer une évacuation hors de l'aube de poussières ou impuretés présentes dans l'air frais collecté en pied d'aube et provenant de l'environnement extérieur.

Pour assurer valablement le dépoussiérage de l'aube, chaque trou de dépoussiérage 24 de la paroi de fond 18 est situé en vis-à-vis d'un trou de dépoussiérage correspondant 23 de la paroi séparatrice 22 selon la direction EV, et le nombre de trous de dépoussiérage de la paroi de fond est identique au nombre de trous de dépoussiérage de la paroi séparatrice. Plus généralement, la section totale des trous de la paroi de fond est égale à la section totale des trous de la paroi séparatrice pour assurer valablement l'évacuation des poussières.

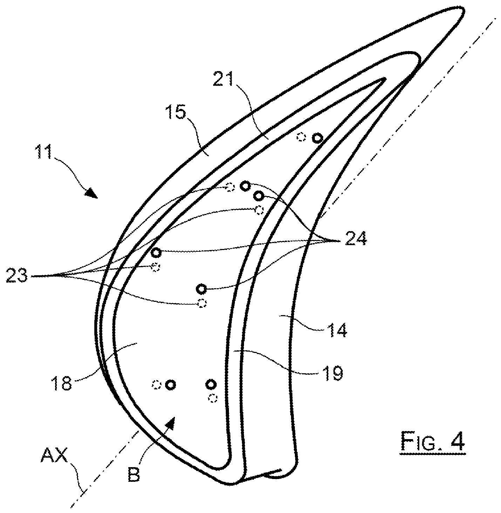

Alternativement, et comme illustré sur les figures 3 et 4, les trous de dépoussiérage 23 et 24 sont décalés les uns par rapport aux autres, pour que l'air issu des trous 23 entrant dans la cavité sous baignoire C forme des jets orientés vers la paroi de fond 18 afin d'assurer un refroidissement par impact de jet sur cette paroi de fond 18. Le refroidissement par impact de jet permet d'obtenir un coefficient d'échange thermique accru, et par là-même d'assurer un refroidissement efficace.

Plus particulièrement, et comme visible sur la figure 4, chaque trou 24 formé dans la paroi de fond 18 est décalé par rapport au trou correspondant 23 formé dans la paroi séparatrice, c'est-à-dire que la projection d'un trou 23 sur la paroi de fond 18 selon la direction d'envergure EV est située à distance du trou 24 correspondant formé dans cette paroi de fond 18.

Dans l'exemple des figures 3 et 4, les trous de dépoussiérage formés dans les parois 18 et 22 s'étendent selon la direction d'envergure EV. Mais il peut être avantageux de prévoir que les trous 24 formés dans la paroi de fond 18 s'étendent selon une direction oblique par rapport à la direction d'envergure, de manière à constituer des jets d'air orientés vers les bords 19 et 21 de façon à les refroidir.

Pour accroître le refroidissement des bords 19 et 21, chaque trou 23 formé dans la paroi séparatrice est alors avantageusement situé au droit d'un trou correspondant 24 formé dans la paroi de fond 18, selon la direction d'envergure. Le jet d'air généré par un trou 23 est ainsi orienté directement vers un trou 24 correspondant de façon à le traverser de façon quasiment directe pour assurer un refroidissement efficace de la portion du bord 19 ou 21 ventilée par ce trou 24 dont l'orientation est oblique. Ainsi, avantageusement, chaque trou de la paroi séparatrice débouche au moins en partie sur un trou de la paroi de fond correspondant, ce qui permet en outre d'assurer un refroidissement par impact avant évacuation des poussières. L'orientation des trous 24 vers les bords 19 et 21 permet d'assurer un refroidissement par impact de ces bords.

Dans ce cas, il n'y a pas d'impact de l'air de refroidissement issu des trous 23 sur la paroi de fond 18 : le refroidissement des bords est alors favorisé par rapport à celui de la cavité sous baignoire C.

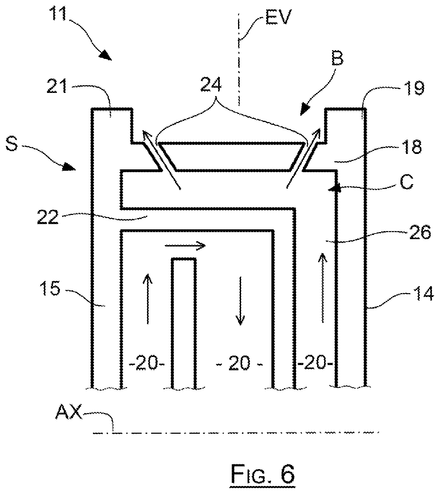

Comme illustré sur la figure 6, le refroidissement des bords 19 et 21 peut encore être augmenté en prévoyant un conduit 26 débouchant directement dans la cavité sous baignoire C pour l'alimenter avec un plus grand débit d'air frais, afin d'accroître le débit des trous de dépoussiérage 24 orientés vers les bords 19 et 21.

Afin d'accroître la tenue thermique de l'aube, la face externe de la paroi de fond 18 peut être couverte d'un revêtement de barrière thermique.

Selon l'invention, l'aube 11 est obtenue en fabriquant d'abord une pièce brute issue de fonderie constituant un corps de l'aube comprenant son pied P, les paroi d'intrados 14 et d'extrados 15, et au moins la paroi séparatrice 22, et en constituant ensuite la paroi de fond 18 par fabrication additive sur cette pièce brute pour délimiter la cavité sous baignoire C et la baignoire B.

L'obtention de la pièce brute est assurée par fonderie, avec un moule et un ensemble de noyaux comprenant au moins deux éléments espacés l'un de l'autre le long de la direction d'envergure EV d'une distance correspondant à l'épaisseur de la paroi séparatrice. Ces éléments de noyaux sont installés dans le moule en étant espacés des faces internes de ce moule pour délimiter avec ces faces internes les parois d'intrados 14 et d'extrados 15.

La constitution de la paroi de fond 18 est assurée en positionnant la pièce brute dans un outil de préhension, avant de positionner au voisinage de la paroi séparatrice 22 un appareillage de dépôt comprenant principalement une buse de dépôt de poudre métallique et un faisceau laser pour fusionner la poudre déposée.

Un tel appareillage permet d'assurer une opération de fabrication additive selon le procédé dit LMD, signifiant Laser Metal Deposition. D'autres appareillages peuvent être prévus pour assurer la constitution de la paroi séparatrice 22 par fabrication additive, selon le procédé LMD ou selon d'autres procédés analogues.

Des couches métalliques successives sont alors déposées et fusionnées pour constituer de manière homogène la paroi de fond 18, l'appareillage étant mobile afin de couvrir par balayage toute l'étendue de la paroi de fond 18 à constituer. Eventuellement, l'aube peut être positionnée de telle manière que son axe d'envergure EV s'étende selon une direction horizontale ou bien sensiblement inclinée lors de cette opération d'apport de matière métallique, pour que la paroi soit constitutuée par fabrication additive selon une direction proche de la verticale, de manière à minimiser les angles de contre-dépouille durant le processus.

Après avoir été constituée par apport de matière métallique, cette paroi de fond 18 peut éventuellement être reprise par usinage, par exemple par électroérosion ou traitement chimique, pour réduire la rugosité de la surface externe de cette paroi de fond et ainsi diminuer le coefficient d'échange thermique externe ce qui permet de réduire l'échauffement de la surface.

Avantageusement, la paroi de fond 18 est constituée par apport de matière métallique de manière à présenter un épaisseur qui est non constante, de façon par exemple à délimiter au niveau de sa face interne, c'est-à-dire la plus proche du pied P, un évidement au niveau de chaque trou de dépoussiérage. Chaque évidement constitue alors une embouchure élargie du trou de dépoussiérage correspondant pour favoriser l'admission d'air issu de la cavité sous baignoire C. Ces évidements permettent alors de diminuer le nombre de trous 24 formés dans la paroi de fond 18, et/ou de réduire la section de ces trous pour augmenter la vitesse de l'air dans la cavité sous baignoire pour améliorer son refroidissement.

## Revendications

1. Procédé de fabrication d'une aube (11) de turbomachine comprenant une paroi d'intrados (14) et une paroi d'extrados (15) espacées l'une de l'autre, cette aube (11) comprenant un sommet (S) avec :
- une paroi de fond (18) s'étendant de la paroi d'intrados (14) à la paroi d'extrados (15), la paroi d'intrados (14) et la paroi d'extrados (15) comprenant chacune un bord libre (19, 21) s'étendant au-delà de cette paroi de fond (18) pour délimiter conjointement avec cette paroi de fond (18) une forme de baignoire (B) au sommet (S) de l'aube (11) ;
- une paroi séparatrice (22) s'étendant de la paroi d'intrados (14) à la paroi d'extrados (15) en étant espacée de la paroi de fond (18) pour délimiter avec cette paroi de fond (18) une cavité sous baignoire (C) ;
le procédé comportant :
- une étape de moulage pour constituer au moins la paroi d'intrados (14), la paroi d'extrados (15) et la paroi séparatrice (22) ;
- une étape de constitution de la paroi de fond (18) avec un procédé de fabrication additive par apport de matière métallique.

2. Procédé selon la revendication 1, dans lequel le procédé de fabrication additive est un procédé par dépôt de poudre métallique fusionnée par rayon laser, LMD.

3. Procédé selon la revendication 1 ou 2, comportant la formation de trous de dépoussiérage (24) dans la paroi de fond (18).

4. Procédé selon la revendication 3 dans lequel les trous de dépoussiérage (24) de la paroi de fond (18) ont des orientations obliques dirigées vers les bords (19, 21) des parois d'intrados (14) et/ou d'extrados (15).

5. Procédé selon la revendication 3, comportant la formation dans la paroi séparatrice (22) de trous de dépoussiérage (23) qui sont décalés par rapport aux trous de dépoussiérage (24) de la paroi de fond (18).

6. Procédé selon la revendication 5, dans lequel chaque trou de dépoussiérage (23) de la paroi séparatrice (22) est à une distance de la périphérie de l'aube formée par les parois d'intrados (14) et d'extrados (15) qui est inférieure à la distance séparant le trou de dépoussiérage (23) correspondant de la paroi de fond (18) de la périphérie de l'aube.

7. Procédé selon la revendication 5, dans lequel chaque trou de dépoussiérage (24) de la paroi de fond (18) est situé au moins en partie en vis-à-vis d'un trou de dépoussiérage (23) de la paroi séparatrice (22).

8. Procédé selon la revendication 5, dans lequel on forme autant de trous de dépoussiérage (24) traversant la paroi de fond (18) que de trous de dépoussiérage (23) traversant la paroi séparatrice (22).

9. Procédé selon l'une des revendications 1 à 8, comportant la formation dans l'aube d'un conduit (26) d'alimentation en air de la cavité sous baignoire (C).

## Patentansprüche

1. Verfahren zum Herstellen einer Schaufel (11) einer Turbomaschine, die eine Unterseitenwand (14) und eine Oberseitenwand (15) umfasst, die voneinander beabstandet sind, wobei die Schaufel (11) einen Scheitel (S) mit Folgendem umfasst:
- eine Bodenwand (18), die sich von der Unterseitenwand (14) zur Oberseitenwand (15) erstreckt, wobei die Unterseitenwand (14) und die Oberseitenwand (15) jeweils einen freien Rand (19, 21) umfassen, der sich über die Bodenwand (18) hinaus erstreckt, um zusammen mit der Bodenwand (18) eine Wannenform (B) am Scheitel (S) der Schaufel (11) zu begrenzen;
- eine Trennwand (22), die sich von der Unterseitenwand (14) zur Oberseitenwand (15) erstreckt und von der Bodenwand (18) beabstandet ist, um zusammen mit der Bodenwand (18) einen Hohlraum unter der Wanne (C) zu begrenzen;
wobei das Verfahren Folgendes beinhaltet:
- einen Schritt des Formens, um mindestens die Unterseitenwand (14), die Oberseitenwand (15) und die Trennwand (22) zu bilden;
- einen Schritt des Bildens der Bodenwand (18) mit einem additiven Herstellungsverfahren durch Zuführen von Metallmaterial.

2. Verfahren nach Anspruch 1, wobei das additive Herstellungsverfahren ein Verfahren der Metallpulverbeschichtung durch Laserschmelzen (LMD-Verfahren) ist.

3. Verfahren nach Anspruch 1 oder 2, das das Bilden von Entstaubungslöchern (24) in der Bodenwand (18) beinhaltet.

4. Verfahren nach Anspruch 3, wobei die Entstaubungslöcher (24) der Bodenwand (18) schräg zu den Rändern (19, 21) der Unterseitenwand (14) und/oder der Oberseitenwand (15) ausgerichtet sind.

5. Verfahren nach Anspruch 3, das das Bilden von Entstaubungslöchern (23) in der Trennwand (22) beinhaltet, die in Bezug auf die Entstaubungslöcher (24) der Bodenwand (18) versetzt sind.

6. Verfahren nach Anspruch 5, wobei jedes Entstaubungsloch (23) der Trennwand (22) in einem Abstand zum Umfang der durch die Unterseitenwand (14) und die Oberseitenwand (15) gebildeten Schaufel liegt, der kleiner ist als der Abstand, der das der Bodenwand (18) entsprechende Entstaubungsloch (23) vom Umfang der Schaufel trennt.

7. Verfahren nach Anspruch 5, wobei sich jedes Entstaubungsloch (24) der Bodenwand (18) mindestens teilweise gegenüber einem Entstaubungsloch (23) der Trennwand (22) befindet.

8. Verfahren nach Anspruch 5, wobei so viele Entstaubungslöcher (24) durch die Bodenwand (18) gebildet werden, wie Entstaubungslöcher (23) durch die Trennwand (22).

9. Verfahren nach einem der Ansprüche 1 bis 8, das das Bilden eines Luftzufuhrkanals (26) zum Hohlraum unter der Wanne (C) in der Schaufel beinhaltet.

## Claims

1. Method for manufacturing a vane (11) of a turbine engine comprising a pressure-face wall (14) and a suction-face wall (15) spaced apart from one another, this vane (11) comprising a tip (S) with:
- a bottom wall (18) extending from the pressure-face wall (14) to the suction-face wall (15), the pressure-face wall (14) and the suction-face wall (15) each comprising a free edge (19, 21) extending beyond this bottom wall (18) to delimit, together with this bottom wall (18), a squealer shape (B) at the tip (S) of the vane (11);
- a partition wall (22) extending from the pressure-face wall (14) to the suction-face wall (15) and spaced apart from the bottom wall (18) to delimit, together with this bottom wall (18), a cavity (C) under the squealer tip;
the method including:
- a moulding step to form at least the pressure-face wall (14), the suction-face wall (15) and the partition wall (22);
- a step of forming the bottom wall (18) using an additive manufacturing method by adding metal material.

2. Method according to claim 1, wherein the additive manufacturing method is a laser-fused metal powder deposition method, LMD.

3. Method according to claim 1, including the formation of dust holes (24) in the bottom wall (18).

4. Method according to claim 3, wherein the dust holes (24) in the bottom wall (18) are obliquely oriented towards the edges (19, 21) of the pressure-face wall (14) and/or suction-face wall (15).

5. Method according to claim 3, including the formation, in the partition wall (22), of dust holes (23) which are offset from the dust holes (24) in the bottom wall (18).

6. Method according to claim 5, wherein the distance between each dust hole (23) in the partition wall (22) and the periphery of the vane formed by the pressure-face wall (14) and suction-face wall (15) is shorter than the distance between the corresponding dust hole (23) in the bottom wall (18) and the periphery of the vane.

7. Method according to claim 5, wherein each dust hole (24) in the bottom wall (18) is located at least in part facing a dust hole (23) in the partition wall (22).

8. Method according to claim 5, wherein the same number of dust holes (24) are formed through the bottom wall (18) as there are dust holes (23) through the partition wall (22).

9. Method according to claim 1, including the formation, in the vane, of an air supply duct (26) to the cavity (C) under the squealer tip.
